# EUROPEAN PATENT APPLICATION

(11) **EP 2 196 705 A2**
(43) Date of publication of application: **16.06.2010**
(21) Application number: 09178543.6
(22) Date of filing: 09.12.2009
(51) Int. Cl.: F16H 57/02

(54) **Case unit**

(30) Priority: 11.12.2008 JP 2008315452
(71) Applicant: Toyota Jidosha Kabushiki Kaisha, Toyota-shi, Aichi-ken, 471-8571 (JP)
(72) Inventor: Abiru, Yuji, Aichi-ken 471-8571 (JP)
(74) Representative: Albutt, Anthony John

(57) **Abstract**

A case unit includes a first case (10) having a first mating portion (12), and a second case (20) having a second mating portion (22) that has generally the same outer shape as the first mating portion (12). The second case (20) forms an oil chamber (30) in which lubrication oil is stored by the second mating portion (22) being mated together with the first mating portion (12). Both of the first and second mating portions (12, 22) have an outer shape with few protrusions and recesses, and include a first protruding mating surface (14, 24) formed around the entire edge portion of the mating portion (12, 22), and a second protruding mating surface (18, 28), both ends of which are connected to the first protruding mating surface (14, 24) so that a recessed space (16, 26) is formed between the second protruding mating surface (18, 28) and the first protruding mating surface (14, 24) and is positioned inside the first protruding mating surface (14, 24) and below a rotating body train (40, 50, 60, 70).

## Description

### BACKGROUND OF THE INVENTION

### 1. Field of the Invention

The invention relates to a case unit in which an oil chamber in which lubrication oil is stored is formed by a pair of cases being mated together.

### 2. Description of the Related Art

A transmission case and oil pan of a vehicle are formed by a plurality of cases that are fastened together using fastening means such as nuts and bolts, while the mating surfaces of the cases are mated together.

The transmission case and oil pan also serve as a tank for holding lubrication oil and operating fluid and the like. Therefore, the case is sealed to prevent oil from leaking out by interposing a gasket between the mating surfaces of the cases.

For example, oil is prevented from leaking out of the case by applying a liquid gasket to the mating surfaces, as described in Japanese Patent Application Publication No. 2002-213616 (JP-A-2002-213616) (first example of related art).

FIGS. 6 and 7 show the structure of the mating surfaces in JP-A-2002-213616.

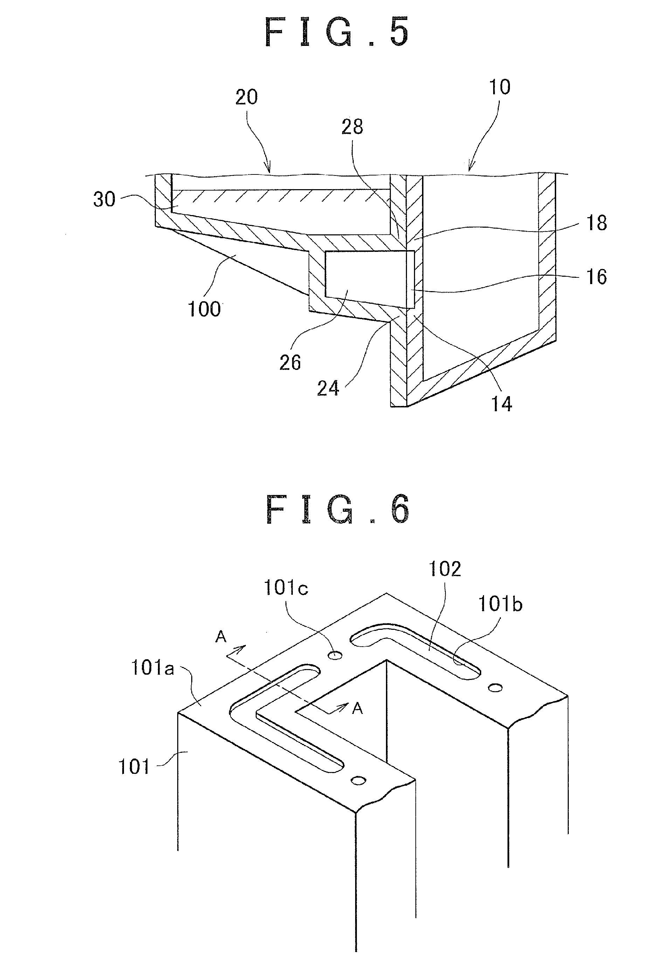

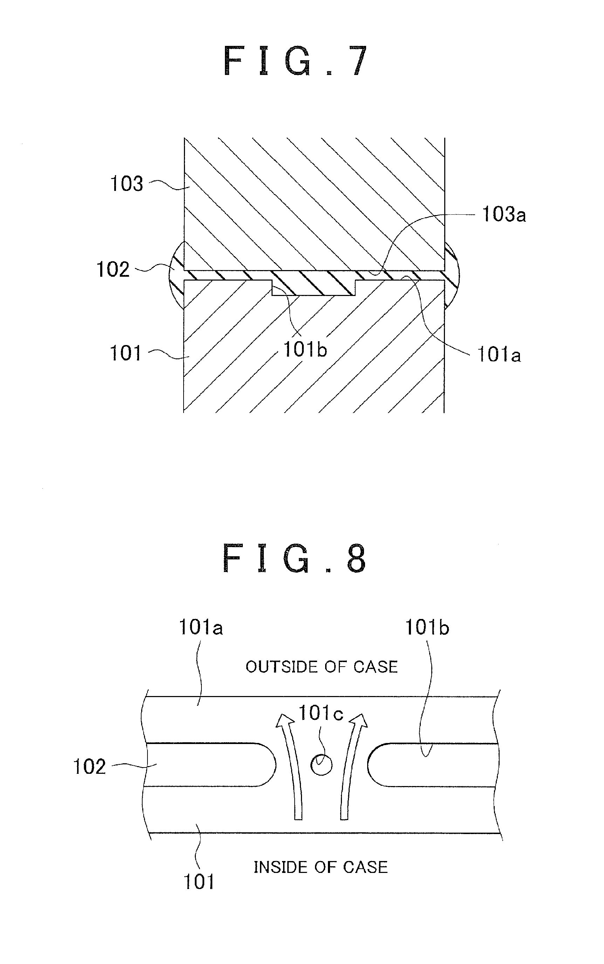

As shown in FIG. 6, a groove 101b is formed in a mating surface 101a of a lower case 101 and filled with sealant 102. Then, when the mating surface 101a of the lower case 101 is mated together with a mating surface 103a of an upper case 103 and the cases are fastened together, the sealant 102 forms a barrier between the inside of the case and the outside of the case, thereby preventing oil from leaking out of the case, as shown in FIG. 7.

Incidentally, bolt holes 101c for fastening the cases together are formed in the mating surface 101a of the lower case 101, as shown in FIG. 6.

FIG. 8 shows a plan view of the mating surface 101a of the lower case 101.

As shown in FIG. 8, the groove 101b is discontinuous at the portions where the bolt holes 101c are formed. As a result, oil may leak out of the case at these portions, as shown by the arrows in the drawing. However, it is difficult to form the groove 101b around the bolt holes 101c without compromising the strength of the case.

Incidentally, it is possible to form the groove 101b so that it is continuous and form flanges on the inside or outside of the case, and form the bolt holes 101c in these flanges. However, in this case, the sealant 102 is unable to be pressed evenly at the inside and outside of the case, so oil may end up leaking out of the case anyway.

Therefore, Japanese Patent Application Publication No. 2006-283806 (JP-A-2006-283806) proposes a mating surface structure between the cases, which is capable of inhibiting oil from leaking out of the case while maintaining the strength of the case (second example of related art).

FIG. 9 shows the mating surface structure between the cases described in JP-A-2006-283806.

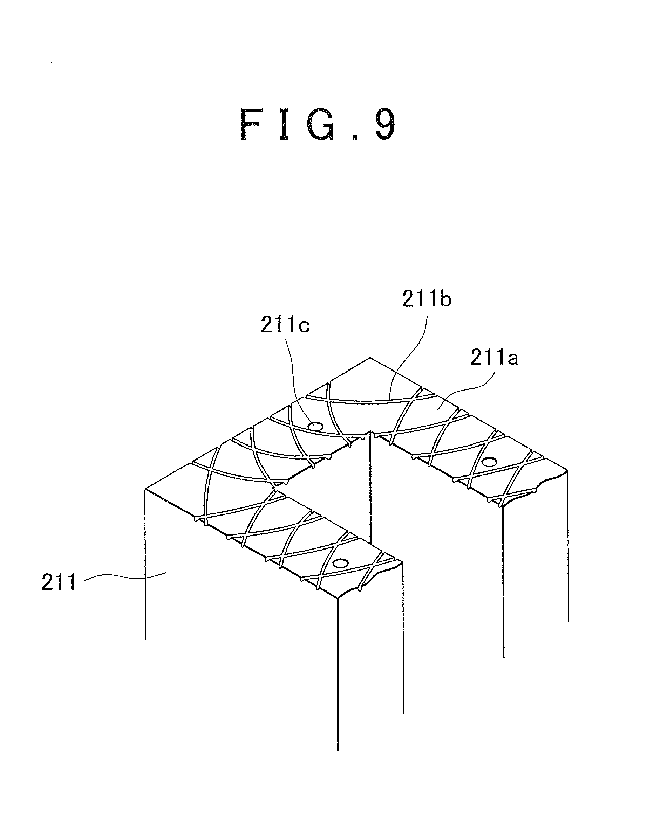

As shown in FIG. 9, a plurality of generally arc-shaped grooves 211b that intersect one another, and bolt holes 211c that serve as the fastening structure, are formed in a mating surface 211a of a lower case 211. The grooves 211b form a continuous groove that separates the inside of the case from the outside of the case, by the grooves 211b intersecting one another such that portions of all of the grooves 211b are interlaced with one another. These grooves 211b are filled with a liquid gasket.

A case unit in which a transmission case is mated together with a transaxle case is one classic example of a case unit in which an oil chamber in which lubrication oil is stored is formed by mating a pair of cases together.

Typically, the mating surface of the transaxle case and the mating surface of the transmission case each have a single shape and is mainly designed to reduce the amount of lubrication oil so as to keep the weight of the case main body from increasing unnecessarily.

However, when considering the rigidity of the case in terms of strength or performance regarding noise and vibration and the like, this idea is not always the best. That is, each of the cases described above needed to have multiple reinforcing ribs to increase the rigidity.

The structure of the mating surface of each case is selected according to the purpose of the case unit having the cases. When employing a structure that gives priority to reducing the amount of oil and weight, it may be necessary to settle for relatively weak rigidity and massively reinforce it. On the other hand, when employing a structure that gives priority to rigidity, the case holds a large amount of lubrication oil. Therefore, loss may occur due to the decrease in the rotation speeds of rotating bodies as a result of the resistance of the oil in the case unit, as well as the increase in weight. In this way, regardless of which type of structure is used, both structures have conflicting disadvantages.

Also, a structure that gives priority to rigidity is a relatively new idea. With this structure, performance in terms of inhibiting noise and vibration of the case unit does improve, but in order to prevent the loss that results from the resistance of the oil, it may be necessary to add a device such as an oil separator / receiver and an oil pump and the like, which would increase costs.

### SUMMARY OF THE INVENTION

The invention provides a case unit capable of reducing the amount of lubrication oil and ensuring rigidity.

One aspect of the invention relates to a case unit. This case unit has a first case having a first mating portion, and a second case having a second mating portion that has generally the same outer shape as the first mating portion. The second case forms an oil chamber in which lubrication oil is stored by the second mating portion and the first mating portion being mated together. The first mating portion and the second mating portion each have an outer shape with few protrusions and recesses. The first mating portion and the second mating portion each have a first protruding mating surface formed around the entire edge portion of the mating portion, and a second protruding mating surface, both ends of which are connected to the first protruding mating surface so that a recessed space is formed between the second protruding mating surface and the first protruding mating surface and the recessed space is positioned inside the first protruding mating surface and below a rotating body train. The first protruding mating surface of the first mating portion and the first protruding mating surface of the second mating portion are joined together, and the second protruding mating surface of the first mating portion and the second protruding mating surface of the second mating portion are joined together.

Forming the case unit by joining the first protruding mating surface of the first case with the first protruding mating surface of the second case, and the second protruding mating surface of the first case with the second protruding mating surface of the second case enables part of the formed oil chamber to be raised, thereby enabling the amount of lubrication oil to be reduced, while also ensuring the desired rigidity.

In the structure described above, the recessed space may be formed so as to separate from the oil chamber. In the structure described above, at least a portion of the recessed space may be positioned below an oil level. In the structure described above, whole of the recessed space may be positioned below an oil level.

In the case unit described above, the second protruding mating surface of the first case and the second protruding mating surface of the second case may each have a curved portion that follows the contour of the lower portion of the rotating body train. In this case, part of the formed oil chamber is able to be raised as much as possible.

In the case unit described above, the rotating body train may be provided in the case unit. In the case unit described above, the outer shape may be an elliptical shape. In the case unit described above, the rotating body train may be provided in plurality; and the outer shape may be a generally line-symmetric with a line segment that connects the center of a first rotating shaft and the center of a second rotating shaft, from among rotating shafts of the plurality of rotating body trains, together as the axis of symmetry. In the case unit described above, the outer shape may be an oval shape. In the case unit described above, at least one of the first case and the second case may be such that the recessed space extends from the corresponding mating portion to a portion of the at least one of the first case and the second case that is farthest from the corresponding mating portion. In the case unit described above, at least one of the first case and the second case may be such that the recessed space extends from the corresponding mating portion toward the opposite side of the at least one of the first case and the second case up to a position that is closer to the corresponding mating portion than a portion of the oil chamber that is farthest from the corresponding mating portion, and a reinforcing rib is connected to the portion of the oil chamber that is farthest from the corresponding mating portion and the partition wall that forms the recessed space. In the case unit described above, the second protruding mating surface may be an end surface of a partition wall that separates an inside of the corresponding case into the oil chamber and the recessed space. In the case unit described above, the partition wall may have a curved portion that follows a contour of a lower portion of the rotating body train so as to form the recessed space below the rotating body train. In the case unit described above, both ends of the second protruding mating surface may be connected to the first protruding mating surface below the rotating body train. In the case unit described above, both ends of the second protruding mating surface may be connected to a lower portion of the first protruding mating surface.

Accordingly, the invention makes it possible to provide a case unit capable of reducing the amount of lubrication oil and ensuring rigidity.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 shows an exploded perspective view of a case unit according to an example embodiment of the invention;
FIG. 2 shows a view of cases, which together form the case unit shown in FIG. 1, as viewed from the mating portion side of each case;
FIG. 3 shows a simplified view of the case unit as it appears when the cases shown in FIG. 1 are mated together;
FIG. 4 shows a sectional view taken along line X-X in FIG. 3;
FIG. 5 shows a longitudinal sectional view of the main portion of a case unit according to a modified example of the invention;
FIG. 6 shows a perspective view of a mating surface of a lower case according to a first example of related art;
FIG. 7 shows a sectional view taken along line A-A in FIG. 6;
FIG. 8 shows a plan view of the mating surface of the lower case shown in FIG. 6; and
FIG. 9 shows a perspective view of the mating surface of a lower case according to second example of related art.

### DETAILED DESCRIPTION OF EMBODIMENTS

Example embodiments of the present invention will be described in greater detail below with reference to the accompanying drawings.

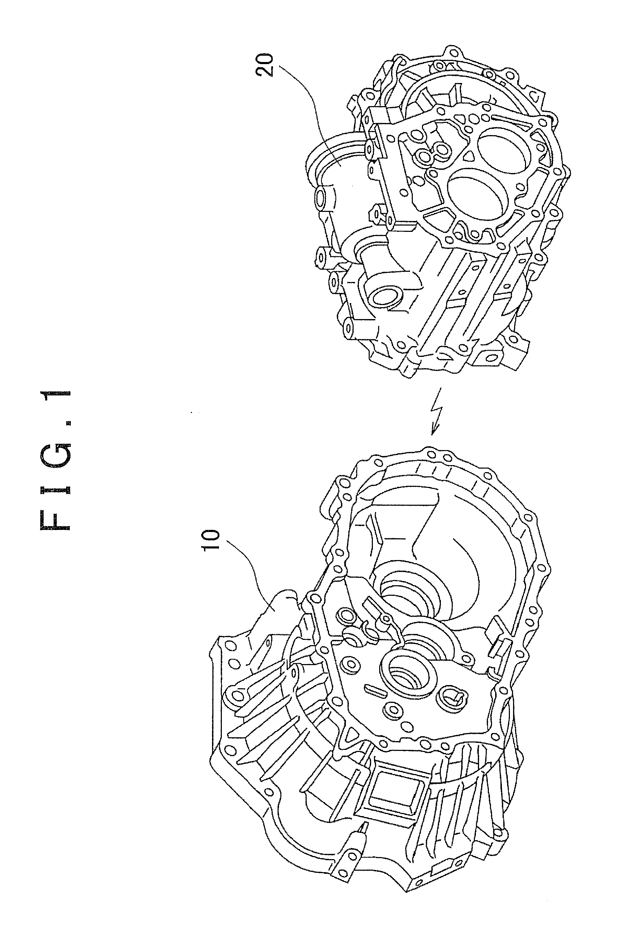

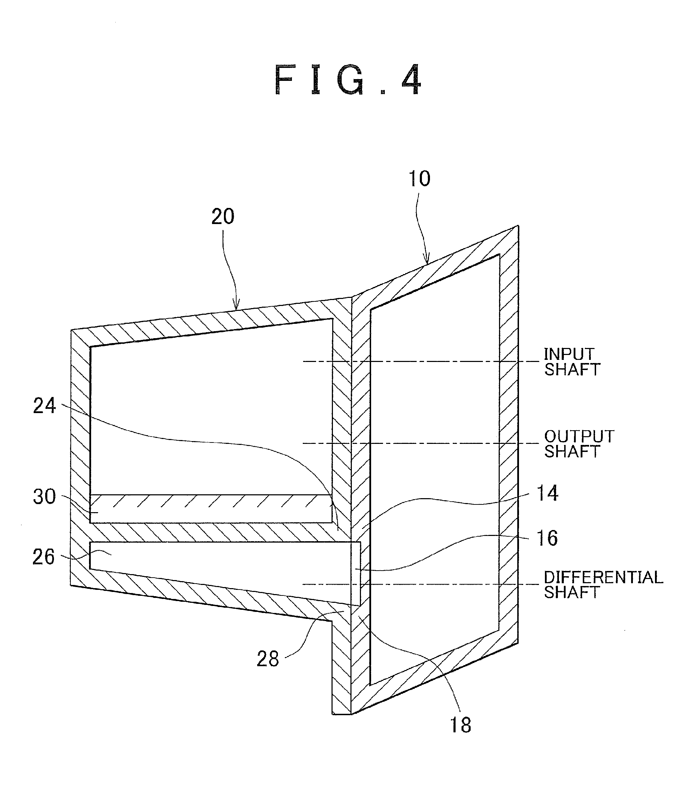

Referring to FIGS. 1 to 4, the case unit of an example embodiment of the invention is applied to a MT (manual transmission) vehicle. In this case unit, an oil chamber 30 (see FIG. 4) in which lubrication oil is stored is formed by mating together a transaxle case 10 and a transmission case 20, which are a pair of cases that together form the case unit.

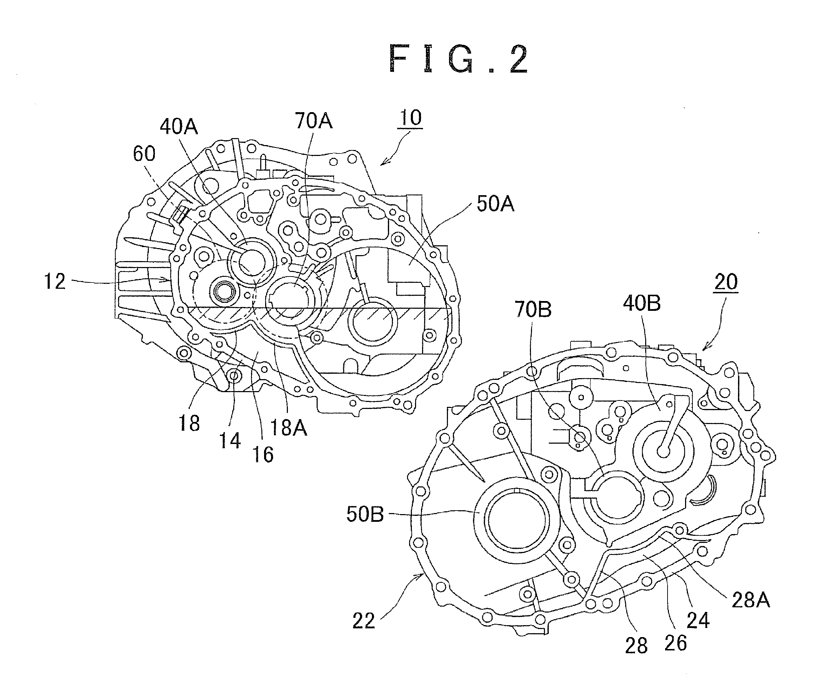

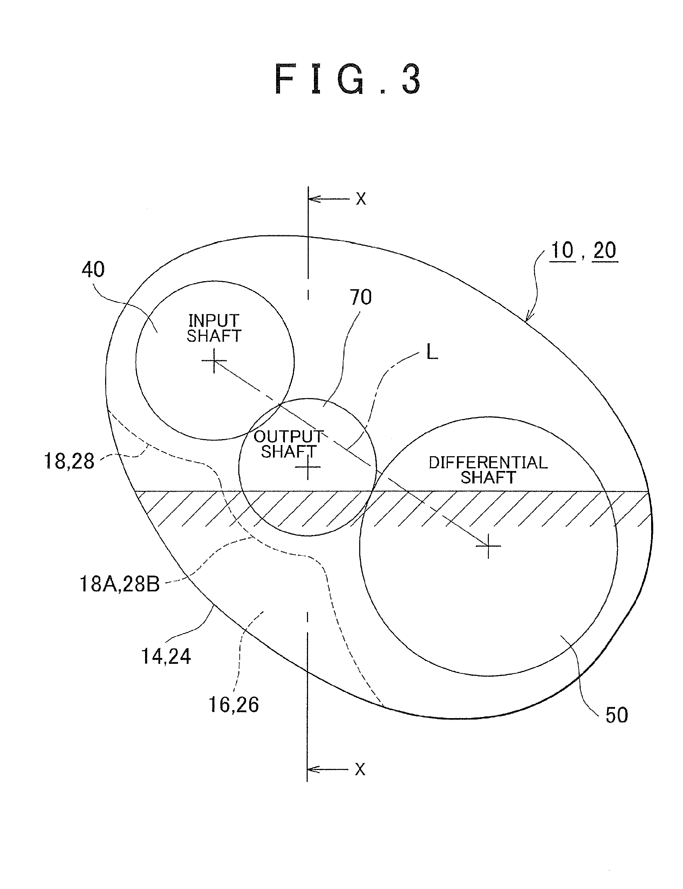

The outer shape of a mating portion 12 of the transaxle case 10 has few protrusions and recesses, as shown in FIGS. 2 and 3, in order to improve surface stiffness. More specifically, the outer shape of the mating portion 12 of the transaxle case 10 has a generally line-symmetric oval shape, with a line segment L that connects the center of an input shaft 40 and the center of a differential shaft 50 together as the axis of symmetry, as shown in FIG. 3.

The mating portion 12 of the transaxle case 10 includes a first protruding mating surface 14 and a second protruding mating surface 18, as shown in FIG. 2. The first protruding mating surface 14 is formed along the entire edge portion of the mating portion 12. The second protruding mating surface 18 is formed with both ends connected to a lower portion of the first protruding mating surface 14 within the area enclosed by the first protruding mating surface 14, such that this second protruding mating surface 18 separates inside of the transaxle case 10, and a recessed space 16 is formed between the second protruding mating surface 18 and the first protruding mating surface 14. The second protruding mating surface 18 has a curved portion 18A that follows the contour of the lower portion of a shifting gear train 60 on the inside of the first protruding mating portion 14.

Boss portions 40A, 70A, and 50A of an input shaft 40, an output shaft 70 (see FIG. 3), and a differential shaft 50, respectively, are provided in this order from left to right in the upper area separated from the recessed space 16 by the second protruding mating surface 18, within the area enclosed by the second protruding mating surface 18 and the first protruding mating surface 14.

Meanwhile, the outer shape of the mating portion 22 of the transmission case 20 is the same as the outer shape of the mating portion 12 of the transaxle case 10, as shown in FIGS. 2 and 3. That is, the outer shape of the mating portion 22 of the transmission case 20 has a generally line-symmetric oval shape with a line segment L that connects the center of the input shaft 40 and the center of the differential shaft 50 together as the axis of symmetry, so that there are few protrusions and recesses in order to improve surface stiffness.

Similar to the mating portion 12 of the transaxle case 10, the mating portion 22 of the transmission case 20 includes a first protruding mating surface 24 and a second protruding mating surface 28, as shown in FIG. 2. The first protruding mating surface 24 is formed along the entire edge portion of the mating portion 22. The second protruding mating surface 28 is formed with both ends connected to a lower portion of the first protruding mating surface 24 within the area enclosed by the first protruding mating surface 24, such that this second protruding mating surface 18 separates inside of the transaxle case 10, and a recessed space 26 is formed between the second protruding mating surface 18 and the first protruding mating surface 24. The second protruding mating surface 28 has a curved portion 28A that follows the contour of the lower portion of a shifting gear train 60 on the inside of the first protruding mating portion 24.

The depth of the recessed space 26 in the transmission case 20 is deeper than the recessed space 16 in the transaxle case 10, as shown in FIG. 4. More specifically, the recessed space 26 in the transmission case 20 extends from the mating portion 22 of the transmission case 20 all the way to a portion on the opposite side of the transmission case 20 that is farthest from the mating portion 22.

Boss portions 50B, 70A, and 40B of the differential shaft 50, the output shaft 70, and the input shaft 40, respectively, are provided in this order from left to right in the upper area separated from the recessed space 26 by the second protruding mating surface 28, within the area enclosed by the second protruding mating surface 28 and the first protruding mating surface 24, as shown in FIG. 2.

During assembly of the case unit, the first protruding mating surface 14 of the transaxle case 10 is joined with the first protruding mating surface 24 of the transmission case 20, and the second protruding mating surface 18 of the transaxle case 10 is joined with the second protruding mating surface 28 of the transmission case 20.

Forming the case unit with the first protruding mating surface 14 of the transaxle case 10 joined with the first protruding mating surface 24 of the transmission case 20 and the second protruding mating surface 18 of the transaxle case 10 joined with the second protruding mating surface 28 of the transmission case 20 in this way results in the second protruding mating surfaces 18 and 28 being sealed between of the transaxle case 10 and the transmission case 20 of the case unit, such that a space that will not be filled with lubrication oil is formed. Accordingly, the level of part of the formed oil chamber 30 is raised, as shown in FIG. 4, which enables the amount of lubrication oil to be reduced. Also, at the same time, the first protruding mating surface 14 contacts the first protruding mating surface 24. Accordingly, the rigidity when a load is applied is determined by the first protruding mating surfaces 14 and 24, which enables the desired rigidity to be ensured.

In other words, rigidity no longer needs to be taken into account with the second protruding mating surfaces 18 and 28, so the transaxle case 10 and the transmission case 20 (i.e., the case unit) are able to be designed taking only the improvement of lubrication performance into account. Therefore, the degree of freedom in design increases. Moreover, the second protruding mating surfaces 18 and 28 make it possible to reduce the size of the separator and the like provided to separate an oil chamber into plural oil chamber in order to reduce the amount of oil, or eliminate the separator and the like all together.

In particular, in this example embodiment, the second protruding mating surfaces 18 and 28 of the transaxle case 10 and the transmission case 20 have the curved portions 18A and 28A, respectively, which follow the contour of the lower portion of the shifting gear train 60, which is one rotating body train. This enables part of the formed oil chamber 30 to be raised as much as possible.

In this embodiment, the rotating body train is not only the shifting gear train 60, but also the input shaft 40, the output shaft 70 and the differential shaft 50. Incidentally, the invention is not limited to the example embodiment described above.

(1) In the example embodiment described above, the recessed space 26 in the transmission case 20 is formed deep, extending from the mating portion 22 of the transmission case 20 to the farthest portion of the transmission case 20. However, the invention is not limited to this kind of structure. That is, the purpose of the invention is able to be sufficiently achieved even if the recessed space 26 in the transmission case 20 is formed shallow, extending from the mating portion 22 of the transmission case 20 toward the opposite side of the transmission case 20, and a reinforcing rib 100 is provided extending from the wall portion that forms the recessed space 26 to a portion of the transmission case 20 that is farthest from the mating portion 22, as shown in FIG. 5.

(2) In the example embodiment described above, the invention is applied to a transmission case of a MT vehicle. However, the invention is not limited to this structure. That is, the invention may also be applied to the transmission case of an automatic transmission. In particular, when the invention is applied to the transmission case of a CVT (continuously variable transmission), the curved portion of the second protruding mating surface of both cases need only be formed so that it follows the contour of the lower portion of a rotating body train which includes a primary pulley, a secondary pulley, and a pulley belt that is wound around the primary and secondary pulleys, and the like.

(3) In the example embodiment described above, the outer shape of the mating portion of both the transaxle case and the transmission case has a generally line-symmetric oval shape with a line segment that connects the center of the input shaft and the center of the differential shaft together as the axis of symmetry. However, the invention is not limited to this. That is, the outer shape of the mating portion does not have to be oval-shaped as long as it has few protrusions and recesses in order to improve the surface stiffness.

(4) In the example embodiment described above, the curved portion that follows the contour of the shifting gear train is formed on the second protruding mating surface of the mating portion of both the transaxle case and the transmission case. However, the invention is not limited to this. For example, the second protruding mating surface may be formed so that both ends of the second protruding mating surface are connected to the first protruding mating surface so that a recessed space is formed between the second protruding mating surface and the first protruding mating surface, and the recessed space is positioned inside of the first protruding mating surface and below the shifting gear train without forming the curved portion on the second protruding mating surface of the mating portion of both the transaxle case and the transmission case.

(5) In the example embodiment described above, at least a portion of the recessed space may be positioned below an oil level, the whole of the recessed space may be positioned below an oil level. The invention is of course also intended to include various design changes and modifications that are within the scope of the appended claims for patent.

## Claims

1. A case unit **characterized by** comprising:
a first case (10) having a first mating portion (12); and
a second case (20) having a second mating portion (22) that has generally the same outer shape as the first mating portion (12), the second case (20) forming an oil chamber (30) in which lubrication oil is stored by the second mating portion (22) and the first mating portion (12) being mated together,
wherein the first mating portion (12) and the second mating portion (22) each have an outer shape with few protrusions and recesses;
wherein the first mating portion (12) and the second mating portion (22) each have a first protruding mating surface (14, 24) formed around the entire edge portion of the mating portion (12, 22), and a second protruding mating surface (18, 28), both ends of which are connected to the first protruding mating surface (14, 24) so that a recessed space (16, 26) is formed between the second protruding mating surface (18, 28) and the first protruding mating surface (14, 24) and the recessed space (16, 26) is positioned inside the first protruding mating surface (14, 24) and below a rotating body train (40, 50, 60, 70); and
wherein the first protruding mating surface (14) of the first mating portion (12) and the first protruding mating surface (24) of the second mating portion (22) are joined together, and the second protruding mating surface (18) of the first mating portion (12) and the second protruding mating surface (28) of the second mating portion (22) are joined together.

2. The case unit according to claim 1, wherein the recessed space (16, 26) is formed so as to separate from the oil chamber (30).

3. The case unit according to claim 2, wherein at least a portion of the recessed space (16, 26) is positioned below an oil level.

4. The case unit according to claim 2, wherein whole of the recessed space (16, 26) is positioned below an oil level.

5. The case unit according to any one of claims 1 to 4, wherein the second protruding mating surface (18) of the first case (10) and the second protruding mating surface (28) of the second case (20) each have a curved portion (18A, 28A) that follows the contour of the lower portion of the rotating body train (60).

6. The case unit according to any one of claims 1 to 5, wherein the rotating body train (60) is provided in the case unit.

7. The case unit according to any one of claims 1 to 6, wherein the outer shape is an elliptical shape.

8. The case unit according to claim 7, wherein the rotating body train (40, 50, 60, 70) is provided in plurality; and the outer shape is a generally line-symmetric with a line segment that connects the center of a first rotating shaft and the center of a second rotating shaft, from among rotating shafts of the plurality of rotating body trains (40, 50, 60, 70), together as the axis of symmetry.

9. The case unit according to claim 7 or 8, wherein the outer shape is an oval shape.

10. The case unit according to any one of claims 1 to 9, wherein at least one of the first case (10) and the second case (20) is such that the recessed space (16, 26) extends from the corresponding mating portion (12, 22) to a portion of the at least one of the first case (10) and the second case (20) that is farthest from the corresponding mating portion (12, 22).

11. The case unit according to any one of claims 1 to 9, wherein at least one of the first case (10) and the second case (20) is such that the recessed space (16, 26) extends from the corresponding mating portion (12, 22) toward the opposite side of the at least one of the first case (10) and the second case (20) up to a position that is closer to the corresponding mating portion (12, 22) than a portion of the oil chamber (30) that is farthest from the corresponding mating portion (12, 22), and a reinforcing rib is connected to the portion of the oil chamber (30) that is farthest from the corresponding mating portion (12, 22) and the partition wall that forms the recessed space (16, 26).

12. The case unit according to any one of claims 2 to 11, wherein the second protruding mating surface (18, 28) is an end surface of a partition wall that separates an inside of the corresponding case (10, 20) into the oil chamber (30) and the recessed space (16, 26).

13. The case unit according to claim 12, wherein the partition wall has a curved portion (18A, 28A) that follows a contour of a lower portion of the rotating body train (60) so as to form the recessed space (16, 26) below the rotating body train (60).

14. The case unit according to any one of claims 1 to 13, wherein both ends of the second protruding mating surface (18, 28) are connected to the first protruding mating surface (14, 24) below the rotating body train (60).

15. The case unit according to any one of claims 1 to 14, wherein both ends of the second protruding mating surface (18, 28) are connected to a lower portion of the first protruding mating surface (14, 24).
